# EUROPEAN PATENT APPLICATION

(11) **EP 4 786 396 A1**
(43) Date of publication of application: **05.08.2026**
(21) Application number: 25216607.9
(22) Date of filing: 18.11.2025
(51) Int. Cl.: B66B 1/30

(54) **ELEVATOR SYSTEM WITH CAPACITOR PRE-CHARGE**

(30) Priority: 29.01.2025 US 202519040423
(71) Applicant: Otis Elevator Company, Farmington, Connecticut 06032 (US)
(72) Inventor: Dehmlow, Marvin, Farmington, 06032 (US); Tempelhoff, Annika, Farmington, 06032 (US); Oesterle, Robert, Farmington, 06032 (US); Nagarajan, Prasanna, Farmington, 06032 (US)
(74) Representative: Schmitt-Nilson Schraud Waibel Wohlfrom Patentanwälte Partnerschaft mbB

(57) **Abstract**

An elevator power system includes a drive including: an AC-DC converter configured to generate a DC voltage on a DC link; a capacitor connected across the DC link; a DC-AC inverter configured to convert the DC voltage to an AC drive signal to power a motor; a rescue unit including: a power converter configured to supply a DC output voltage to the DC link to pre-charge the capacitor; a controller in communication with the drive and the rescue unit, the controller configured to control the power converter to pre-charge the capacitor.

## Description

Embodiments described herein relate to elevator systems, and particularly to elevator systems configured to pre-charge a DC link capacitor of a variable frequency drive.

Elevator systems may include a drive, such as a variable frequency (VF) drive, configured to power a motor that imparts motion to an elevator car. VF drives may contain a direct current (DC) link capacitor, which needs to be pre-charged before connecting the drive to a main source of alternating current (AC) electrical power, often referred to as the mains or the grid. In existing elevator systems, pre-charging of the DC link capacitor is usually done via pre-charge resistors, which are bypassed by a relay once the DC link capacitor is charged. The existing pre-charging circuits are costly and occupy space inside of a drive cabinet.

According to an embodiment, an elevator power system includes a drive including: an AC-DC converter configured to generate a DC voltage on a DC link; a capacitor connected across the DC link; a DC-AC inverter configured to convert the DC voltage to an AC drive signal to power a motor; a rescue unit including: a power converter configured to supply a DC output voltage to the DC link to pre-charge the capacitor; a controller in communication with the drive and the rescue unit, the controller configured to control the power converter to pre-charge the capacitor.

Particular embodiments further may include at least one, or a plurality of, the following optional features, alone or in combination with each other:

In addition to one or more of the features described herein, or as an alternative, further embodiments may include a main relay connecting the AC-DC converter to a main AC source; wherein the controller is configured to determine when the capacitor is to be pre-charged in response to opening of the main relay.

In addition to one or more of the features described herein, or as an alternative, further embodiments may include wherein the main relay is opened (i) after N runs of an elevator car, (ii) if an elevator system has not been operated for a certain time, and/or (iii) when the main AC source is unavailable.

In addition to one or more of the features described herein, or as an alternative, further embodiments may include a sensor configured to sense the voltage across the capacitor.

In addition to one or more of the features described herein, or as an alternative, further embodiments may include wherein the power converter is an AC-DC power converter.

In addition to one or more of the features described herein, or as an alternative, further embodiments may include wherein the power converter is a DC-DC power converter.

In addition to one or more of the features described herein, or as an alternative, further embodiments may include wherein the power converter is powered by an energy storage device configured for rescue operations.

In addition to one or more of the features described herein, or as an alternative, further embodiments may include wherein the controller is configured to: determine when the capacitor is to be pre-charged; in response to determining that the capacitor is to be pre-charged, activate the power converter; monitor a voltage across the capacitor; in response to the voltage across the capacitor being equal to or greater than a threshold, deactivate the power converter.

According to another embodiment, an elevator system includes a hoistway; an elevator car configured to travel in the hoistway; and the elevator power system.

Particular embodiments further may include at least one, or a plurality of, the above optional features, alone or in combination with each other:

According to another embodiment, a method of controlling an elevator power system includes determining when a capacitor is to be pre-charged; in response to determining that the capacitor is to be pre-charged, activating the power converter; monitoring a voltage across the capacitor; and in response to the voltage across the capacitor being equal to or greater than a threshold, deactivating the power converter.

Particular embodiments further may include at least one, or a plurality of, the following optional features, alone or in combination with each other:

In addition to one or more of the features described herein, or as an alternative, further embodiments may include wherein determining that the capacitor is to be pre-charged is in response to opening of a main relay connecting the AC-DC converter to a main AC source.

In addition to one or more of the features described herein, or as an alternative, further embodiments may include wherein the main relay is opened (i) after N runs of an elevator car (ii), if an elevator system has not been operated for a certain time, and/or (iii) when the main AC source is unavailable.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

The present disclosure is illustrated by way of example and not limited in the accompanying figures in which like reference numerals indicate similar elements.
FIG. 1 is a schematic illustration of an elevator system that may employ various embodiments of the present disclosure.
FIG. 2 depicts an elevator power system in an example embodiment.
FIG. 3 is a flowchart of a process for pre-charging a DC link capacitor in an example embodiment.

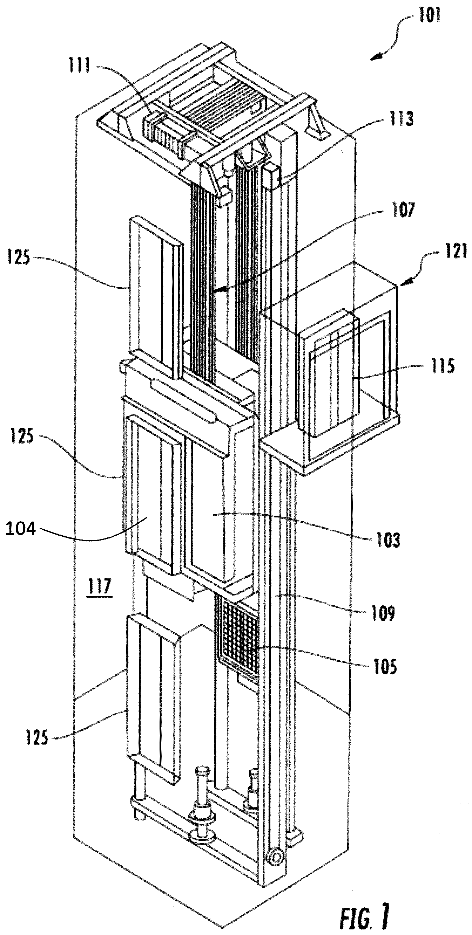

FIG. 1 is a perspective view of an elevator system 101 including an elevator car 103, a counterweight 105, a tension member 107, a guide rail 109, a machine 111, a position reference system 113, and a controller 115. The elevator car 103 and the counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft or the hoistway 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of the elevator car 103 and/or the counterweight 105, as known in the art. For example, without limitation, the position reference system 113 can be an encoder, sensor, or other system and can include velocity sensing, absolute position sensing, etc., as will be appreciated by those of skill in the art.

The controller 115 may be located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along the guide rail 109, the elevator car 103 may stop at one or more landings 125 as controlled by the controller 115. Although shown in the controller room 121, those of skill in the art will appreciate that the controller 115 can be located and/or configured in other locations or positions within the elevator system 101. In one embodiment, the controller 115 may be located remotely or in a distributed computing network (e.g., cloud computing architecture). The controller 115 may be implemented using a processor-based machine, such as a personal computer, server, distributed computing network, etc.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

The elevator system 101 also includes one or more elevator doors 104. The elevator door 104 may be attached to the elevator car 103 or the elevator door 104 may be located on a landing 125 of the elevator system 101, or both. Embodiments disclosed herein may be applicable to both an elevator door 104 attached to the elevator car 103 or an elevator door 104 located on a landing 125 of the elevator system 101, or both. The elevator door 104 opens to allow passengers to enter and exit the elevator car 103.

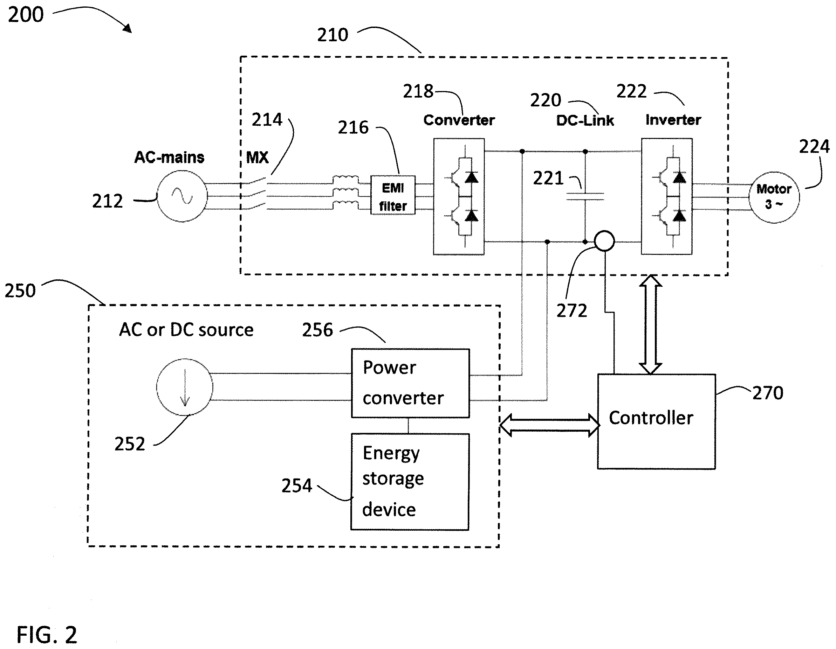

FIG. 2 depicts an elevator power system 200 in an example embodiment. The elevator power system 200 includes a drive 210 and a rescue unit 250. The drive 210 receives alternating current (AC) power from a main AC source 212. The main AC source 212 may be multi-phase AC power (e.g., three-phase AC power), referred to as mains power or grid power.

The drive 210 includes one or more main relays 214 that connect or disconnect the drive 210 and the main AC source 212. An EMI filter 216 may be used on each phase of the multi-phase AC power from the main AC source 212 to remove noise. An AC-DC converter 218 receives the AC power from the main AC source 212 and generates a DC voltage on a DC link 220. The DC link 220 includes a capacitor 221 used to filter out ripples in the DC voltage on a DC link 220. The capacitor 221 may be implemented using one or more interconnected capacitors. The capacitor 221 is connected across the DC link 220 (e.g., from a positive voltage to a negative voltage).

The DC voltage on the DC link 220 is coupled to a DC-AC inverter 222 which converts the DC voltage on the DC link 220 to an AC drive signal to power a motor 224. The AC drive signal may be a variable frequency (VF) drive signal to control a speed of the motor 224. The AC drive signal may be a multi-phase AC drive signal (e.g., three-phase AC drive signal) depending on the type of motor 224. The motor 224 may be part of the machine 111, that imparts motion to the elevator car 103.

The rescue unit 250 is used to power the motor 224 if the main AC source 212 is unavailable. The main AC source 212 may be unavailable, for example, when the local power grid has experienced a disruption. The main AC source 212 may be unavailable, for example, during periods of high-power demand on the power grid (e.g., brown out situation).

The rescue unit 250 includes a power source 252 and an energy storage device 254. The power source 252 may be an AC power source or a DC power source. The energy storage device 254 may be a source of DC power, such as one or more batteries, capacitors, etc. As is known in the art, the rescue unit 250 provides power sufficient to move the elevator car 103 to a landing 125 in the event of an emergency or malfunction.

A power converter 256 generates a DC output voltage. During a rescue operation, the DC output voltage from the power converter 256 is used to power the motor 224. The DC output voltage from the power converter 256 is also used to pre-charge the capacitor 221 before connecting the drive 210 to the main AC source 212. In one embodiment, the power converter 256 is an AC-DC converter that converts AC power from the power source 252 to the DC output voltage. In another embodiment, the power converter 256 is a DC-DC converter that converts DC power from the power source 252 to the DC output voltage. In another embodiment, the power converter 256 is a DC-DC converter that converts DC power from the energy storage device 254 to the DC output voltage. The output of the power converter 256 is connected across the DC link 220.

A controller 270 is in communication with both the drive 210 and the rescue unit 250. The controller 270 may be implemented using the elevator controller 115. In other embodiments, the controller 270 is implemented by a stand-alone controller, which is in communication with the elevator controller 115. The controller 270 may be implemented using a processor-based machine, such as a personal computer, server, distributed computing network, etc. The controller 270 may be implemented in hardware (e.g., ASIC, FPGA) or in a combination of hardware/software. A sensor 272 is in communication with the controller 270. The sensor 272 may be a voltage sensor that provides a voltage across the capacitor 221 to the controller 270.

To reduce or eliminate in-rush current to the AC-DC converter 218, it is desirable to have the capacitor 221 pre-charged to a voltage equal to or greater than a threshold voltage before connecting the main AC source 212 to the AC-DC converter 218 through the one or more main relays 214. The threshold voltage may be defined by the DC output of the AC-DC converter 218. For example, if the output of the AC-DC converter 218 is 570 volts DC, then the capacitor 221 should be pre-charged to a voltage of 570 volts DC or greater. For example, the capacitor 221 may be pre-charged to a voltage of 570-800 volts DC.

The capacitor 221 is pre-charged using the DC output voltage of the power converter 256. In one embodiment, the capacitor 221 is charged using the DC output voltage of the power converter 256, powered by the AC power source 252. In another embodiment, the capacitor 221 is charged using the DC output voltage of the power converter 256, powered by the energy storage device 254. The energy storage device 254 is also used to perform elevator car 103 rescue operations as typically performed in the art.

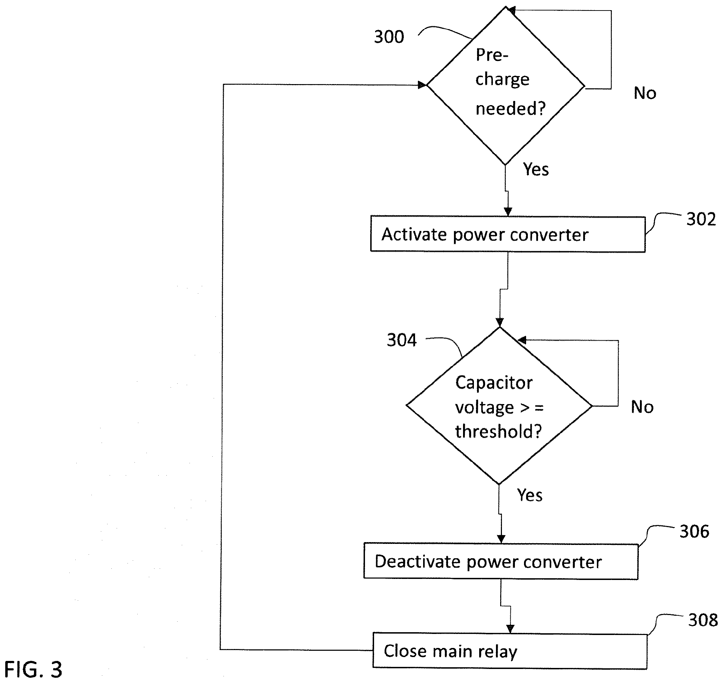

The controller 270 controls when to pre-charge the capacitor 221. FIG. 3 is a flowchart of a process for pre-charging the capacitor 221 in an example embodiment. The process begins at 300 where the controller 270 determines if pre-charging of the capacitor 221 is needed. The decision of whether pre-charging of the capacitor 221 is needed may be based on the status of the main relay 214. If the main relay 214 has been opened, then the capacitor 221 will discharge rapidly (e.g., in 60 seconds) and the capacitor 221 will require pre-charging before the main relay 214 is closed. The main relay 214 may be opened in response to one or more events, such as after every N runs of the elevator car 103 (where N is 1 or more). The main relay 214 may be opened if the elevator system 101 has not been operated for a certain time (e.g., 30 minutes). The main relay 214 may be opened for power conservation. The main relay 214 may be opened in response to the main AC source 212 being unavailable due to a fault or other event. Elevator runs are only performed when main relay 214 is closed, for normal operation.

If no pre-charging of the capacitor 221 is needed at block 300, the method idles at 300. Once the controller 270 determines that pre-charging of the capacitor 221 is needed, flow proceeds to 302. At 302, the controller 270 activates the power converter 256 so that the DC output voltage of the power converter 256 charges the capacitor 221. As noted above, the power converter 256 can receive power from power source 252 (which may be AC or DC) or from the energy storage device 254. At 304, the controller 270 determines if the voltage across the capacitor 221 is equal to or greater than the threshold voltage. The process holds at 304 until the voltage across the capacitor 221 is equal to or greater than the threshold voltage.

Once the voltage across the capacitor 221 is equal to or greater than the threshold voltage, flow proceeds to 306 where the controller 270 deactivates the power converter 256. Flow proceeds to 308 where the controller 270 sends a signal to close the main relay 214. The process then returns to 308.

Embodiments of this disclosure use an existing rescue unit 250 for pre-charging the capacitor 221 in the DC link 220 of the drive 210. This eliminates the need for a separate circuit for pre-charging the capacitor 221 in the DC link 220 of the drive 210. The rescue unit 250 still performs conventional rescue operations.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification and/or the claims, specify the presence of stated features, steps, operations, elements, and/or components, but do not preclude the presence or addition of one or more other features, steps, operations, elements, components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. An elevator power system comprising:
a drive including:
an AC-DC converter configured to generate a DC voltage on a DC link;
a capacitor connected across the DC link; and
a DC-AC inverter configured to convert the DC voltage to an AC drive signal to power a motor;
a rescue unit including:
a power converter configured to supply a DC output voltage to the DC link to pre-charge the capacitor;
a controller in communication with the drive and the rescue unit, the controller configured to control the power converter to pre-charge the capacitor.

2. The elevator power system of claim 1, further comprising:
a main relay connecting the AC-DC converter to a main AC source;
wherein the controller is configured to determine when the capacitor is to be pre-charged in response to opening of the main relay.

3. The elevator power system of claim 2, wherein the main relay is opened (i) after N runs of an elevator car, (ii) if an elevator system has not been operated for a certain time, and/or (iii) when the main AC source is unavailable.

4. The elevator power system of claim 3, further comprising a sensor configured to sense the voltage across the capacitor.

5. The elevator power system of any of claims 1 to 4, wherein the power converter is an AC-DC power converter.

6. The elevator power system of any of claims 1 to 5, wherein the power converter is a DC-DC power converter.

7. The elevator power system of claim 6, wherein the power converter is powered by an energy storage device configured for rescue operations.

8. The elevator power system of any of claims 1 to 7, wherein the controller is configured to:
determine when the capacitor is to be pre-charged;
in response to determining that the capacitor is to be pre-charged, activate the power converter;
monitor a voltage across the capacitor; and
in response to the voltage across the capacitor being equal to or greater than a threshold, deactivate the power converter.

9. An elevator system comprising:
a hoistway;
an elevator car configured to travel in the hoistway; and
the elevator power system according to any of claims 1 to 8.

10. A method of controlling the elevator power system according to any of claims 1 to 9, the method comprising:
determining when the capacitor is to be pre-charged;
in response to determining that the capacitor is to be pre-charged, activating the power converter;
monitoring a voltage across the capacitor; and
in response to the voltage across the capacitor being equal to or greater than a threshold, deactivating the power converter.

11. The method of claim 10, wherein determining that the capacitor is to be pre-charged is in response to opening of a main relay connecting the AC-DC converter to a main AC source.

12. The method of claim 11, wherein the main relay is opened (i) after N runs of an elevator car (ii), if an elevator system has not been operated for a certain time, and/or (iii) when the main AC source is unavailable.
